# EUROPÄISCHE PATENTSCHRIFT

(11) **EP 0 935 712 B1**
(45) Veröffentlichungstag und Bekanntmachung des Hinweises auf die Patenterteilung: **26.02.2003**
(21) Anmeldenummer: 98936215.7
(22) Anmeldetag: 18.06.1998
(51) Int. Cl.: F04B 53/16, F04B 1/04

(54) **KOLBENPUMPE**
PISTON PUMP
POMPE A PISTON

(30) Priorität: 30.07.1997 DE 19732818
(43) Veröffentlichungstag der Anmeldung: 18.08.1999
(73) Patentinhaber: ROBERT BOSCH GMBH, 70442 Stuttgart (DE)
(72) Erfinder: SCHULLER, Wolfgang, D-74343 Sachsenheim (DE); WEH, Andreas, D-87471 Durach (DE)
(86) Internationale Anmeldenummer: DE9801672
(87) Internationale Veröffentlichungsnummer: WO99006708

(56) Entgegenhaltungen:
- WO-A-95/03198
- DE-A- 4 027 794
- DE-A- 4 243 667
- DE-A- 4 426 945
- PATENT ABSTRACTS OF JAPAN vol. 098, no. 006, 30. April 1998 & JP 10 030576 A (UNISIA JECS CORP), 3. Februar 1998

## Beschreibung

### Stand der Technik

Die Erfindung betrifft eine Kolbenpumpe nach der Gattung des Hauptanspruchs

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschiupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Aus der DE 40 27 794 A1 ist eine derartige Kolbenpumpe bekannt. Die bekannte Kolbenpumpe weist einen Kolben auf, der axial verschieblich in einer Laufbuchse geführt ist, die in eine Zylinderbohrung eines Pumpengehäuses eingesetzt ist. Auf einer Stirnseite der Laufbuchse wird die Zylinderbohrung von einem Verschlußteil verschlossen, das druckdicht in die Zylinderbohrung des Pumpengehäuses eingesetzt ist. Vor dem Einsetzen in das Pumpengehäuse wird das Verschlußteil durch Bördeln mit der Laufbuchse verbunden, wodurch sich eine gut handhabbare Vormontagebaugruppe ergibt, die sich einfach in das Pumpengehäuse einsetzen läßt. Von Nachteil ist, daß das Verschlußteil in einem zusätzlichen Arbeitsgang mit der Laufbuchse verbunden werden muß.

### Vorteile der Erfindung

Bei der erfindungsgemäßen Kolbenpumpe mit den Merkmalen des Anspruchs 1 sind das Verschlußteil und die Laufbuchse mit einer Schnapp- oder Rastverbindung miteinander verbunden. Dies hat den Vorteil, daß Laufbuchse und Verschlußteil vor dem Einsetzen in das Pumpengehäuse durch einfaches Zusammenstecken miteinander verbunden werden. Ein zusätzlicher Verbindevorgang, beispielsweise das aus dem Stand der Technik bekannte Bördeln, entfällt. Laufbuchse und Verschlußteil bilden eine gut handhabbare Vormontagegruppe, die einfach beispielsweise durch Einpressen in das Pumpengehäuse eingesetzt werden kann. Da die Verbindung zwischen Verschlußteil und Laufbuchse nur eine untergeordnete Aufgabe hat, sie muß das Verschlußteil bis zum Einsetzen der Kolbenpumpe in das Pumpengehäuse an der Laufbuchse halten, wobei eine ungefähr fluchtende Ausrichtung von Verschlußteil und Laufbuchse ausreichen und eine Abdichtung zwischen Verschlußteii und Laufbuchse unnötig ist, genügt eine Schnapp- oder Rastverbindung. Nach dem Einsetzen in das Pumpengehäuse werden das Verschlußteil und die Laufbuchse vom Pumpengehäuse in aufeinander ausgerichteter Position gehalten, eine Abdichtung besteht zwischen dem Pumpengehäuse und der Laufbuchse bzw. dem Verschlußteil. Der Verbindung zwischen Verschlußteil und Laufbuchse kommt nach dem Einsetzen dieser beiden Teile in das Pumpengehäuse keine Bedeutung mehr zu. Eine Schnappverbindung, die sich durch Auseinanderziehen von Verschlußteil und Laufbuchse wieder lösen läßt, reicht aus zum Verbinden des Verschlußteils mit der Laufbuchse. Ebenso eignet sich eine unlösbare Rastverbindung zum Verbinden des Verschlußteils mit der Laufbuchse.

Die Unteransprüche haben vorteilhafte Ausgestaltungen und Weiterbildungen der im Hauptanspruch angegebenen Erfindung zum Gegenstand.

### Zeichnung

Die Erfindung wird anhand eines in der Zeichnung dargestellten Ausführungsbeispiels näher erläutert. Es zeigen:
- Figur 1: einen Achsschnitt einer erfindungsgemäßen Kolbenpumpe; und

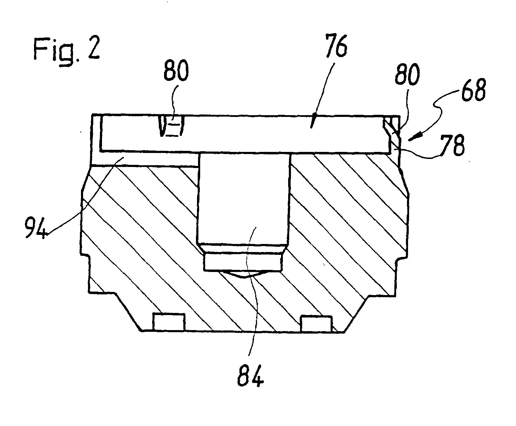

- Figur 2: einen Achsschnitt eines Verschlußteils der erfindungsgemäßen Kolbenpumpe in größerem Maßstab.

### Beschreibung des Ausführungsbeispiels

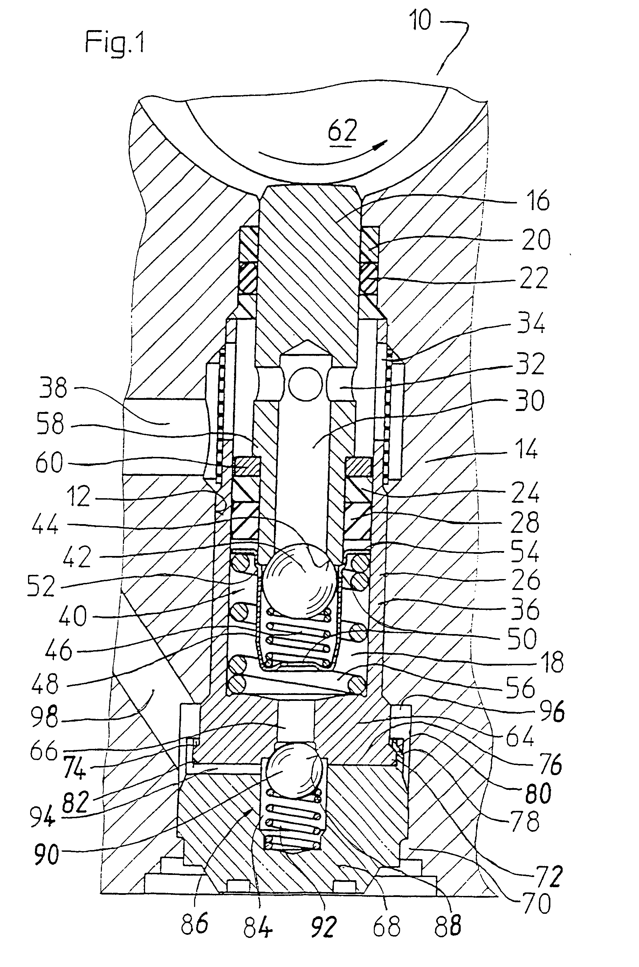

Die erfindungsgemäße, insgesamt mit 10 bezeichnete, in Figur 1 dargestellte Kolbenpumpe ist in eine gestufte Zylinderbohrung 12 eingesetzt, welche in einem Hydraulikblock angebracht ist, der ein Pumpengehäuse 14 bildet. Der Hydraulikblock, von dem in der Zeichnung nur ein die Kolbenpumpe 10 umgebendes Bruchstück dargestellt ist, ist Bestandteil einer schlupfgeregelten, im übrigen nicht dargestellten, hydraulischen Fahrzeugbremsanlage. In ihn sind außer der Kolbenpumpe 10 weitere hydraulische Bauteile wie Magnetventile oder Druckspeicher eingesetzt und hydraulisch miteinander und mit der erfindungsgemäßen Kolbenpumpe 10 verschaltet.

Die Kolbenpumpe 10 weist einen Kolben 16 auf, dessen eines, einem Verdrängungsraum 18 abgewandtes Ende aus einer Laufbuchse 26 vorsteht und mit einem Führungsring 20 im Pumpengehäuse 14 geführt und mit einem Dichtring 22 abgedichtet ist. Ein anderes, dem Verdrängungsraum 18 zugewandtes Ende des Kolbens 16 befindet sich in der Laufbuchse 26 und ist mit einem Führungsring 24 in der Laufbuchse 26 der Kolbenpumpe 10 geführt und mit einem Dichtring 28 abgedichtet. Die Laufbuchse 26 ist mit einer Preßpassung in die Zylinderbohrung 12 des Pumpengehäuses 14 eingesetzt. Die Preßpassung bewirkt eine Abdichtung zwischen Ein- und Auslaßseite, d. h. zwischen Nieder- und Hochdruckseite der Kolbenpumpe 10.

Für den Pumpeneinlaß ist im Kolben 16 eine axiale Sackbohrung 30 von einer Verdrängungsraumseite her angebracht, die nahe ihres Grundes von Querbohrungen 32 gekreuzt wird. Sack- und Querbohrungen 30, 32 kommunizieren durch Fenster 34 in einer Umfangswand 36 der Laufbuchse 26 mit einer Zuströmbohrung 38, die radial zur Kolbenpumpe 10 in dem das Pumpengehäuse 14 bildenden Hydraulikblock angebrachten ist.

Am verdrängungsraumseitigen Ende des Kolbens 16 ist ein Rückschlagventil als Einlaßventil 40 angebracht: Das Einlaßventil 40 weist eine Ventilkugel 42 als Ventilschließkörper auf, die mit einem konischen Ventilsitz 44 zusammenwirkt, der an einer Mündung der Sackbohrung 30 des Kolbens 16 angebracht ist. Eine Schraubendruckfeder als Ventilschließfeder 46 drückt die Ventilkugel 42 gegen den Ventilsitz 44. Ventilkugel 42 und Ventilschließfeder 46 sind in einem Ventilgehäuse 48 aufgenommen, welches als napfförmiges Tiefziehteil aus Blech mit einem etwa dem Durchmesser des Kolbens 16 entsprechenden Durchmesser hergestellt und mit Durchströmöffnungen 50 versehen ist. Das Ventilgehäuse 48 weist eine Ringstufe 52 auf, mit der es an einer dem Verdrängungsraum 18 zugewandten Stirnseite des Kolbens 16 anliegt. Es weist einen mit ihm einstückigen, nach außen stehenden Radialflansch 54 auf, gegen den eine Schraubendruckfeder als Kolbenrückstellfeder 56 drückt und auf diese Weise das Ventilgehäuse 48 am Kolben 16 hält. Der Radialflansch 54 hält zugleich den Führungsring 24 und den Dichtring 28 zwischen sich und einem sich an einer Ringschulter 58 des Kolbens 16 abstützenden Stützring 60 in axialer Richtung auf dem Kolben 16. Die Kolbenrückstellfeder 56 ist erheblich stärker als die Ventilschließfeder 46. Die Kolbenrückstellfeder 56 hält das Ventilgehäuse 48 gegen die Kraft der Ventilschließfeder 46 am Kolben 16.

Die Kolbenrückstellfeder 56 drückt über den Radialflansch 54 des Ventilgehäuses 48 den Kolben 16 in axialer Richtung gegen einen elektromotorisch antreibbaren Exzenter 62, der zum Antrieb des Kolbens 16 zu einer hin- und hergehenden Hubbewegung in an sich bekannter Weise dient.

Auf einer Verdrängungsraumseite weist die Laufbuchse 26 einen mit ihr einstückigen Laufbuchsenboden 64 auf, in dem ein durchgehendes Mittelloch 66 für den Pumpenauslaß angebracht ist.

Auf der Verdrängungsraumseite ist ein Verschlußteil 68, das die Form eines zylindrischen Stopfens aufweist, in die Zylinderbohrung 12, eingesetzt und durch eine Verstemmung 70 befestigt und fluiddicht im Pumpengehäuse 14 abgedichtet. Das Verschlußteil 68 hält zugleich die Laufbuchse 26 in der Zylinderbohrung 12.

Das Verschlußteil 68 ist über eine Schnappverbindung mit der Laufbuchse 26 verbunden: Die Laufbuchse 26 weist an ihrem Laufbuchsenboden 64 einen Radialbund 72 auf, der eine Hinterschneidung 74 an seiner dem Verschlußteil 68 abgewandten Seite bildet. Die Laufbuchse 26 ist mit ihrem Laufbuchsenboden 64 in eine zylindrische Vertiefung 76 in einer der Laufbuchse 26 zugewandten Stirnseite des Verschlußteils 68 eingesetzt. Der Radialbund 72 am Laufbuchsenboden 64 befindet sich innerhalb eines hohlzylindrischen Randes 78 des Verschlußteils 68, welcher die zylindrische Vertiefung 76 umgibt.

In den hohlzylindrischen Rand 78 sind drei radial nach innen stehende Schnappwarzen 80 über den Umfang verteilt eingeprägt, die den Radialbund 72 der Laufbuchse 26 hintergreifen und auf diese Weise das Verschlußteil 68 am Laufbuchsenboden 64 halten. Das Verbinden des Verschlußteils 68 mit der Laufbuchse 26 erfolgt durch einfaches Zusammendrücken dieser beiden Teile, wobei eine Fase 82 am Radialbund 72 der Laufbuchse 26 den hohlzylindrischen Rand 78 an den Schnappwarzen 80 elastisch aufweitet, bis die Schnappwarzen 80 den Radialbund 72 überwunden haben und diesen hintergreifen. Anstelle einzelner Schnappwarzen 80 kann auch eine umlaufende Schnappsicke am Rand 78 des Verschlußteils 68 ausgebildet sein (nicht dargestellt).

Das Verschlußteil 68 kann spanend oder spanlos beispielsweise durch Kaltschlagen hergestellt sein. Die Schnappwarzen 80 können nach Herstellung des hohlzylindrischen Randes 78 des Verschlußteils 68 durch axiales Aufdrücken eines nicht dargestellten, nachfolgend als Glocke bezeichneten Umformwerkzeugs hergestellt werden, welches den hohlzylindrischen Rand 78 umgreift und drei nach innen abstehende Nocken aufweist, welche die Schnappwarzen 80 formen. Dazu wird kein Gegenwerkzeug benötigt, welches den hohlzylindrischen Rand 78 von innen gegenhält.

Eine weitere Möglichkeit zur Herstellung der Schnappwarzen 80 ist es, einen nicht dargestellten Stempel in die zylindrische Vertiefung 76 einzuführen, welcher zu den Schnappwarzen 80 komplementäre Ausnehmungen an seinem Umfang aufweist. In diese Ausnehmungen werden die Schnappwarzen 80 beispielsweise mittels der im vorigen Absatz beschriebenen Glocke hineinverformt. Nach Abziehen der Glocke läßt sich der Stempel aufgrund der Elastizität des hohlzylindrischen Randes 78 aus der zylindrischen Vertiefung 76 herausziehen. Diese Art der Herstellung der Schnappwarzen 80 hat bei Herstellung des Verschlußteils 68 durch Umformen den Vorteil, daß die Schnappwarzen 80 in einem Arbeitsgang gemeinsam mit dem Verschlußteil 68 herstellbar sind. Der beschriebene Stempel, der in die zylindrische Vertiefung 76 eingeführt wird, ist in diesem Fall Teil eines mehrteiligen, nicht dargestellten Umformwerkzeugs. Der Stempel formt die Vertiefung 76 und vorzugsweise auch das Sackloch 84 mittels eines Stempelfortsatzes.

Die Verbindung des Verschlußteil 68 mit der Laufbuchse 26 erfolgt vor dem Einsetzen in das Pumpengehäuse 14. Die Verbindung des Verschlußteils 68 mit der Laufbuchse 26 schafft eine gut handhabbare Vormontagebaugruppe. Der Verbindung des Verschlußteils 68 mit der Laufbuchse 26 kommt lediglich bis zum Einsetzen dieser beiden Teile in das Pumpengehäuse 14 Bedeutung zu, da Laufbuchse 26 und Verschlußteil 68 nach dem Einsetzen in das und Verstemmen in dem Pumpengehäuse 14 vom Pumpengehäuse 14 aneinander gehalten und zueinander ausgerichtet werden.

An einem Grund der zylindrischen Vertiefung 76 ist ein axiales Sackloch 84 im Verschlußteil 68 angebracht, in welchem ein Rückschlagventil als Auslaßventil 86 untergebracht ist, das mit einem konischen Ventilsitz 88 zusammenwirkt, welcher an einer dem Verschlußteil 68 zugewandten Mündung des Mittellochs 66 im Laufbuchsenboden 64 angebracht ist. Im Sackloch 84 des Verschlußteils 68 ist eine Ventilkugel 90 als Ventilschließkörper eingesetzt, welche von einer Schraubendruckfeder als Ventilschließfeder 92 gegen den Ventilsitz 88 gedrückt wird.

Als Pumpenauslaß ist eine Radialnut 94 im Grund der zylindrischen Vertiefung 76 des Verschlußteils 68 angebracht, welche in das das Auslaßventil 86 aufnehmende Sackloch 84 mündet und durch den hohlzylindrischen Rand 78 des Verschlußteils 68 hindurchgeht. Die Radialnut 94 kommuniziert über einen Ringkanal 96 mit einer im Pumpengehäuse 14 angebrachten Auslaßbohrung 98.

Durch die Schnappwarzen 80 am relativ dünnen Rand 78 entsteht, in radialer Richtung betrachtet, zwischen der Laufbuchse 26 und dem Verschlußteil 68 eine gewisse Elastizität, so daß beim Einbauen der Laufbuchse 26 zusammen mit dem Verschlußteil 68 in das Pumpengehäuse 14 nie ganz vermeidbare Fluchtungsfehler leicht ausgeglichen werden.

## Patentansprüche

1. Kolbenpumpe (10) mit einem zu einer hin- und hergehenden Hubbewegung antreibbaren Kolben (16), der axial verschieblich in einer Laufbuchse (26) aufgenommen ist, die in ein Pumpengehäuse (14) einsetzbar ist, und mit einem Verschlußteil (68), das das Pumpengehäuse (14) druckdicht verschließend auf einer Stirnseite der Laufbuchse (26) in das Pumpengehäuse (14) einsetzbar ist, **dadurch gekennzeichnet, daß** das Verschlußteil (68) mittels einer Schnapp- oder Rastverbindung (72, 74, 80) mit der Laufbuchse (26) verbunden ist.

2. Kolbenpumpe nach Anspruch 1, **dadurch gekennzeichnet, daß** die Laufbuchse (26) eine Hinterschneidung (74) aufweist, die von einem Rand (78) des Verschlußteils (68) hintergriffen wird.

3. Kolbenpumpe nach Anspruch 2, **dadurch gekennzeichnet, daß** der Rand (78) des Verschlußteils (68) mindestens eine Schnapp- oder Rastwarze (80) aufweist, die die Hinterschneidung (74) der Laufbuchse (26) hintergreift.

4. Kolbenpumpe nach Anspruch 2, **dadurch gekennzeichnet, daß** der Rand (78) des Verschlußteils (68) eine umlaufende Schnapp- oder Rastsicke aufweist, die die Hinterschneidung (74) der Laufbuchse (26) hintergreift.

5. Kolbenpumpe nach Anspruch 1, **dadurch gekennzeichnet, daß** in das Verschlußteil (68) ein Rückschlagventil (86) eingesetzt ist.

6. Kolbenpumpe nach Anspruch 5, **dadurch gekennzeichnet, daß** die Laufbuchse (26) einen Laufbuchsenboden (64) mit einem Durchgangsloch (66) aufweist, an dessen verschlußteilseitiger Mündung ein Ventilsitz (88) für das Rückschlagventil (86) ausgebildet ist.

## Claims

1. Piston pump (10), with a piston (16) which is capable of being driven in a to-and-fro lifting movement and is received axially displaceably in a liner (26) capable of being inserted into a pump casing (14) and with a closing part (68) which, closing the pump casing (14) in a pressure-tight manner, is capable of being inserted into the pump casing (14) on one end face of the liner (26), **characterized in that** the closing part (68) is connected to the liner (26) by means of a snapping or latching connection (72, 74, 80).

2. Piston pump according to Claim 1, **characterized in that** the liner (26) has an undercut (74), behind which engages an edge (78) of the closing part (68).

3. Piston pump according to Claim 2, **characterized in that** the edge (78) of the closing part (68) has at least one snapping or latching lug (80) which engages behind the undercut (74) of the liner (26).

4. Piston pump according to Claim 2, **characterized in that** the edge (78) of the closing part (68) has a peripheral snapping or latching bead which engages behind the undercut (74) of the liner (26).

5. Piston pump according to Claim 1, **characterized in that** a non-return valve (86) is inserted into the closing part (68).

6. Piston pump according to Claim 5, **characterized in that** the liner (26) has a liner bottom (64) with a passage hole (66), a valve seat (88) for the non-return valve (86) being formed at the mouth of the said passage hole which is located on the closing-part side.

## Revendications

1. Pompe à piston (10) comportant un piston (16) entraîné suivant un mouvement de va-et-vient, ce piston coulissant axialement dans une chemise (26) placée dans un corps de pompe (14) ainsi qu'une pièce d'obturation (68) qui ferme le corps de pompe (14) de manière étanche à la pression, cette pièce d'obturation étant placée dans le corps de pompe (14) du côté frontal de la chemise (26),
**caractérisée en ce que**
la pièce d'obturation (68) est reliée à la chemise (26) par une liaison par encliquetage ou accrochage (72, 74, 80).

2. Pompe à piston selon la revendication 1,
**caractérisée en ce que**
la chemise (26) comporte une partie en contre-dépouille (74), derrière laquelle vient prendre le bord (78) de la pièce d'obturation (68).

3. Pompe à piston selon la revendication 2,
**caractérisée en ce que**
le bord (78) de la pièce d'obturation (68) comporte au moins un bec d'encliquetage ou d'accrochage (80) qui vient prendre derrière la partie en contre-dépouille (74) de la chemise (26).

4. Pompe à piston selon la revendication 2,
**caractérisée en ce que**
le bord (78) de la pièce d'obturation (68) comporte une gorge périphérique d'encliquetage ou d'accrochage dans laquelle vient prendre la partie en contre-dépouille (74) de la chemise (26).

5. Pompe à piston selon la revendication 1,
**caractérisée par**
un clapet anti-retour (86) monté dans la pièce d'obturation (68).

6. Pompe à piston selon la revendication 5,
**caractérisée en ce que**
la chemise (26) comporte un fond (64) muni d'un orifice traversant (66) dont l'embouchure du côté de l'obturation forme un siège de soupape (88) pour le clapet anti-retour.
